# EUROPÄISCHE PATENTSCHRIFT

(11) **EP 2 679 622 B1**
(45) Veröffentlichungstag und Bekanntmachung des Hinweises auf die Patenterteilung: **23.08.2017**
(21) Anmeldenummer: 13173884.1
(22) Anmeldetag: 26.06.2013
(51) Int. Cl.: C08K 3/22

(54) **Verwendung von Aufschlussrückstand aus der Titandioxidproduktion als Füllstoff**
Use of process residue from the production of titanium dioxide as a filler
Utilisation d'un résidu de décomposition résultant de la production de dioxyde de titane comme charge

(30) Priorität: 27.06.2012 DE 102012105640
(43) Veröffentlichungstag der Anmeldung: 01.01.2014
(73) Patentinhaber: Sachtleben Pigment GmbH, 47829 Krefeld (DE)
(72) Erfinder: Harwardt, Marc, 47839 Krefeld (DE); Auer, Gerhard, 47800 Krefeld (DE); Pieper, Jürgen, 47447 Moers (DE); Leipnitz, Christine, 47228 Duisburg (DE)
(74) Vertreter: Nobbe, Matthias

(56) Entgegenhaltungen:
- DE-A1- 19 725 021
- DE-A1-102010 019 375
- Geoffrey Holden: "Thermoplastic Elastomers" In: "Kirk-Othmer Encyclopedia of Chemical Technology", 17 May 2002 (2002-05-17), John Wiley & Sons, Inc., XP055330285, pages 1-23, DOI: 10.1002/0471238961.2008051808151204.a01.pu b2,

## Beschreibung

Die vorliegende Erfindung bezieht sich auf die Verwendung von Aufschlussrückstand, der bei der Gewinnung von Titandioxid als Produktionsrückstand anfällt, als Füllmaterial für Kunststoffe, wie z.B. Elastomere, einschließlich Kautschuk-Elastomeren und thermoplastischen Elastomeren sowie entsprechende Aufschlussrückstand enthaltende Polymerzusammensetzungen.

Generell werden die Eigenschaften von technischen Kunststoffen und Kautschukmischungen sowie deren Vulkanisaten nicht nur durch die Art der eingesetzten Polymere sondern auch wesentlich durch die Art und Menge der verwendeten Zusatzstoffe geprägt. Unter diesen spielen die Füllstoffe eine wesentliche Rolle. Unter Füllstoffen versteht man allgemein feste Zusätze, die sich hinsichtlich ihrer Struktur und Zusammensetzung wesentlich von der Matrix unterscheiden. Dabei handelt es sich meist um anorganische, seltener organische Materialien. Inaktive Füllstoffe oder Extender-Füllstoffe erhöhen das Volumen und erniedrigen den Preis, wohingegen aktive Füllstoffe die physikalischen und mechanischen Eigenschaften des Kunststoffprodukts beeinflussen. Solche aktiven Füllstoffe werden auch allgemein als verstärkende Füllstoffe bezeichnet.

Die umfangreiche Palette der heute verwendeten Füll- und Verstärkungsstoffe kennzeichnet ihre große technische Bedeutung. Während sie ursprünglich dazu dienten, die Kosten von Formmassen zu senken, so steht inzwischen eher die gezielte Veränderung der Eigenschaften eines Kunststoffes im Vordergrund. Eigenschaften die durch Füllstoffe gezielt beeinflusst werden können schließen beispielsweise ein: Verbesserung der Verarbeitbarkeit, Verbilligung der Polymerzusammensetzungen, Erhöhung des E-Moduls, der Druck-/Scher-/ Biegefestigkeit, der Zug- und Reißfestigkeit, der Abriebfestigkeit, der Wärme(form)beständigkeit, der chemischen Beständigkeit (wie z.B. der Säurebeständigkeit), der Farbbeständigkeit, und/oder Härte, Erhöhung der Dichte, Verringerung der Wärmeschrumpfung und der Temperaturabhängigkeit der mechanischen Eigenschaften.

Derzeit verwendete Füllstoffe schließen beispielsweise Kreide, Kieselkreide, Kaolin, Talkum, Gips, Silikate, Kieselsäuren, Glimmer, Feldspat, Nephelin-Syenit, Wollastonit, Quarz, Zinksulfid, Schwerspat, Metalloxide, Aluminiumhydroxid, Ruß, Graphit und organische Füllstoffe und Fasern ein.

Das Sulfatverfahren zur Herstellung bzw. Gewinnung von Titandioxid ist im Stand der Technik bekannt (siehe z.B. Industrial Inorganic Pigments (Herausgeber G. Buxbaum, Wiley-VCH, Weinheim, 3. Auflage 2005, Seite 59 bis 61) oder Ullmann's Encyclopedia of Industrial Chemistry, 5. Auflage, Band A20, Seiten 276-278). Danach wird zunächst das titanhaltige Erz, beispielsweise Ilmenit oder Titanschlacke, gemahlen und dann mit Schwefelsäure aufgeschlossen. Dadurch wird eine feststoffhaltige Lösung oder Suspension, die sogenannte feststoffhaltige Schwarzlösung, in der das Titan gelöst als Titanylsulfat vorliegt, erhalten.

Um die feststoffhaltige Schwarzlösung, gegebenenfalls nach erfolgter Reduktion des in der Lösung befindlichen dreiwertigen Eisens, weiterverarbeiten zu können, ist es notwendig diese Schwarzlösung durch Feststoffabtrennung zu einer feststofffreien Lösung oder Aufschlusslösung, der sogenannten feststofffreien Schwarzlösung, aufzubereiten. Dabei werden die in der Schwarzlösung befindlichen Feststoffpartikel, bei denen es sich üblicherweise um Rückstände des titanhaltigen Ausgangsmaterials d.h. nicht aufgeschlossenes Erz handelt, entfernt. Das ist notwendig, um in den sich anschließenden weiteren Verfahrensschritten und -stufen Titandioxid in ausreichender Reinheit zu gewinnen.

Die Feststoffabtrennung kann beispielsweise durch Zentrifugation, Sedimentation oder durch Filtration erfolgen. In der Regel erfolgt diese Feststoffabtrennung mittels Vakuumfiltern oder Filterpressen, z.B. einem Vakuumdrehfilter oder einer Kammer- oder Membranfilterpresse. Häufig wird der in der feststoffhaltigen Schwarzlösung befindliche Feststoff vor der Filtration in einem Eindicker vorkonzentriert.

Die nach der Feststoffabtrennung erhaltene feststofffreie Schwarzlösung wird dann weiteren Verfahrensstufen zugeführt, in denen beispielsweise Eisensulfat als Filter- bzw. Grünsalz abgetrennt wird. Schließlich wird in einem Hydrolyseschritt das Titanylsulfat als Titanoxidhydrat gefällt, von der verbleibenden Dünnsäure durch Filtration abgetrennt, gewaschen und geglüht, um Titandioxid zu erhalten.

Der bei der Feststoffabtrennung anfallende feste Rückstand wird allgemein als Aufschlussrückstand bezeichnet. Die etablierten Verwertungsverfahren für diesen Aufschlussrückstand sind Neutralisation und Deponierung oder Verwertung als Deponieabdeckung sowie Neutralisation, Trocknung und Verwertung in der Stahlindustrie oder als Asphaltfüllstoff. Insbesondere ist die Verwendung von sulfatarmen, neutralisiertem, inertem, feinteiligem Aufschlussrückstand aus der Titandioxidherstellung nach dem Sulfatverfahren als Füllstoff für Asphalt, Zement oder Beton bekannt (siehe DE 197 25 021 B4 und DE 197 25 018 B4).

Alle diese Verwendungen sind entweder mit effektiven Kosten bzw. bestenfalls mit geringen Erlösen verbunden, so dass diese Verwertungsmöglichkeiten wirtschaftlich unattraktiv sind. Generell stellt eine wirtschaftlich sinnvolle Verwendung des Aufschlussrückstandes nach wie vor ein Problem dar, so dass der Rückstand zurzeit immer noch überwiegend in Deponien endgelagert wird.

Die Erfinder der vorliegenden Erfindung haben nun überraschenderweise gefunden, dass der Aufschlussrückstand aus der Titandioxidproduktion nach dem Sulfatverfahren in vorteilhafter Art und Weise als aktiver, verstärkender Füllstoff für Kunststoffe verwendet werden kann und dabei nicht nur die mechanischen Eigenschaften der Kunststoffe sondern auch deren Farbstabilität und Bewitterungsstabilität verbessert.

In einem ersten Aspekt betrifft die vorliegende Erfindung daher eine Polymerzusammensetzung enthaltend eine Polymermatrix und einen oder mehrere Füllstoffe, wobei mindestens ein Füllstoff den bei der Gewinnung von Titandioxid beim Aufschluss eines titanhaltigen Ausgangsstoffes anfallenden unlöslichen Aufschlussrückstand enthält oder aus diesem hergestellt ist, wobei das Polymer der Polymermatrix aus thermoplastischen Elastomeren oder Mischungen davon ausgewählt wird, und wobei der Aufschlussrückstand bei der Gewinnung von Titandioxid beim Aufschluss eines titanhaltigen Ausgangsstoffes mit Schwefelsäure nach dem Sulfatverfahren anfällt.

In einer Ausführungsform wird der Aufschlussrückstand als aktiver Zuschlag- oder Füllstoff für Elastomere verwendet. Dabei können beispielsweise 0,5 bis 60 Gew.-%, bevorzugt 1 bis 50 Gew.-%, besonders bevorzugt 5 bis 30 Gew.-%, Aufschlussrückstand bezogen auf die Polymerzusammensetzung verwendet werden.

Bei dem Aufschlussrückstand kann es sich um den bei der Filtration der Aufschlusslösung zurückbleibenden Filterkuchen handeln. In bestimmten Ausführungsformen der Erfindung, wird der Aufschlussrückstand vor der Verwendung als Füllstoff mit verdünnter Schwefelsäure und/oder Wasser gewaschen, beispielsweise mit Hilfe einer Filterpresse um die anhaftende titanylsulfathaltige Lösung zu verdrängen. Des Weiteren kann der Aufschlussrückstand vor der Verwendung ganz oder teilweise neutralisiert werden, beispielsweise bis ein pH-Wert von 5 bis 12 eingestellt ist.

Die Neutralisation eines Filterkuchens kann dadurch erfolgen, dass der Filterkuchen mit Wasser redispergiert, mit einer Base als Neutralisationsmittel versetzt und anschließend erneut filtriert und gegebenenfalls nochmals gewaschen wird. Es ist auch möglich, dass die Neutralisation des Filterkuchens ohne erneutes Anmaischen direkt in oder auf dem Filtrieraggregat erfolgt, indem der Filterkuchen mit einer wässrigen Lösung des Neutralisationsmittels gewaschen wird. Es ist auch möglich, dass dem Filterkuchen zum Zwecke der Neutralisation feste oder flüssige Alkalien zugemischt bzw. in den Filterkuchen eingeknetet werden. Als Neutralisationsmittel eignen sich alle gängigen alkalischen Verbindungen, z.B. feste oder gelöste Alkali- oder Erdalkalihydroxide.

Alternativ kann der Filterkuchen so lange mit Wasser gewaschen werden, bis er neutral oder annähernd neutral reagiert, so dass die Zugabe eines Neutralisationsmittels ganz oder teilweise entfallen kann.

In bestimmten Ausführungsformen der Erfindung kann es vorteilhaft sein, den Aufschlussrückstand zu trocknen, beispielsweise durch Trockenblasen mit Luft oder erwärmter Luft.

Weiterhin kann die Trocknung auch mit einem beliebigen, dem Fachmann bekannten Verfahren und Aggregat erfolgen, beispielsweise in einem Trockenschrank, mit einem Bandtrockner, einem Sprühtrockner oder einem Spinflash-Trockner.

Gegebenenfalls kann der getrocknete Aufschlussrückstand zur Verbesserung der weiteren Verarbeitbarkeit zu einem feinen Pulver gemahlen oder desagglomeriert werden, z.B. mittels einer Stiftmühle, einem Walzenstuhl, einer Bauermeistermühle oder anderen dem Fachmann bekannten Aggregaten.

In verschiedenen Ausführungsformen der Erfindung haben mindestens 90 % der Teilchen des Aufschlussrückstandes einen Durchmesser <90 µm, vorzugsweise < 75 µm, noch bevorzugter <50 µm.

Der Aufschlussrückstand, der im Wesentlichen nicht aufgeschlossenes Erz enthält, besitzt einen hohen Gehalt an Titandioxid von 10 bis 90 Gew.-%, vorzugsweise 25 bis 70 Gew.-%, noch bevorzugter 40 bis 60 Gew.-% bezogen auf den Feststoffanteil. Die Angabe des TiO₂-Gehaltes ergibt sich aus elementanalytischen Untersuchungen und erfasst sowohl kristallines Titanoxid als auch nichtkristalline, amorphe Anteile.

Der Aufschlussrückstand kann sowohl Magnesiumtitanat (z.B. in Form von MgTi₂O₅ und/oder Mg_{0,75} Ti_{2,25}O₅) als auch Eisentitanat (Ilmenit FeTiO₃) und Calciumtitanat (z.B. CaTiO₃) enthalten.

Weiterhin enthält der Ausschlussrückstand in verschiedenen Ausführungsformen Eisenoxide, beispielsweise in einer Menge von 0,5 bis 30 Gew.-%, noch bevorzugter 2 bis 20 Gew.-%, berechnet als Fe₂O₃.

Ferner weist der Ausschlussrückstand in verschiedenen Ausführungsformen einen Aluminiumgehalt (als Al₂O₃) von 0,5 bis 20 Gew.-%, vorzugsweise von 2 bis 10 Gew.-% und/oder einen Siliziumgehalt (als SiO₂) von 5 bis 40 Gew.-%, vorzugsweise von 10 bis 20 Gew.-%, auf.

In verschiedenen Ausführungsformen weist der Aufschlussrückstand, welcher erfindungsgemäß verwendet wird, eine BET-Oberfläche von 1 bis 150 m²/g auf, besonders bevorzugt 3 bis 50 m²/g, und insbesondere bevorzugt 5 bis 30 m²/g. Die Bestimmung der BET-Oberfläche erfolgt dabei nach DIN ISO 9277 mittels N₂ bei 77 K an einer bei 140 °C während 1 Stunde entgasten und getrockneten Probe. Die Auswertung erfolgt über Mehrpunktbestimmung (10-Punkt-Bestimmung).

In verschiedenen Ausführungsformen der Erfindung beträgt die Dichte des Füllmaterials 1,25 bis 6 g/cm³, bevorzugt 2 bis 5 g/cm³, besonders bevorzugt 2,5 bis 3 g/cm³.

Ein saurer Aufschlussrückstand ist z.B. das in DE 197 25 018 B4 in Beispiel 3 beschriebene Material. Ein neutraler und salzarmer (insbesondere natriumarmer) Aufschlussrückstand ist z.B. das in DE 197 25 018 B4 in Beispiel 4 beschriebene Material. Der Inhalt dieses Dokuments ist hierin durch Bezugnahme in seiner Gesamtheit eingeschlossen.

In einer Ausführungsform der Erfindung, kann der Aufschlussrückstand die in Polymeren üblicherweise verwendeten Füllstoffe ganz oder teilweise ersetzen. Insbesondere können die in Polymeren üblicherweise verwendeten Füllstoffe bis zu 100 Gew.-%, bevorzugt 50 bis 100 Gew.-% durch den Aufschlussrückstand ersetzt werden. Der Aufschlussrückstand kann in einem Füllstoff enthalten sein, oder der Füllstoff kann aus Aufschlussrückstand hergestellt sein. Die Polymerzusammensetzung kann daher einen oder mehrere Füllstoffe enthalten, wobei mindestens ein Füllstoff Aufschlussrückstand, der bei der Gewinnung von Titandioxid beim Aufschluss eines titanhaltigen Ausgangsstoffes mit Schwefelsäure nach dem Sulfatverfahren anfällt, enthält oder aus diesem hergestellt ist.

Der titanhaltige Ausgangstoff, von dem nach dem Aufschluss der Aufschlussrückstand als Feststoffanteil übrig bleibt, ist üblicherweise Ilmenit oder Titanschlacke oder eine Mischung davon.

In bestimmten Ausführungsformen der Erfindung, beträgt der Sulfatgehalt des Aufschlussrückstandes <5, insbesondere <4, besonders bevorzugt <3, noch bevorzugter <2 Gew.-% bezogen auf den Feststoffgehalt des Aufschlussrückstandes. In einer Ausführungsform beträgt der Sulfatgehalt 2 -3 Gew.-%.

In anderen verschiedenen Ausführungsformen umfasst der Aufschlussrückstand <7, bevorzugt <6, besonders bevorzugt <5, noch bevorzugter <4 Gew.-% wasserlösliche Salze.

In weiteren verschiedenen Ausführungsformen, ist der pH-Wert des Aufschlussrückstandes >2,5, insbesondere >3,5, besonders bevorzugt >4,5. Der pH-Wert des verwendeten Aufschlussrückstands kann durch Neutralisation auf den gewünschten Wert erhöht werden.

In einer Ausführungsform der Erfindung kann der Aufschlussrückstand zusammen mit reinem Titandioxid verwendet werden. Das Titandioxid kann dabei synthetisch hergestellt sein, beispielsweise mittels des Sulfatverfahrens. In einer Ausführungsform beträgt das Massenverhältnis von Aufschlussrückstand zu synthetischem Titandioxid >5:1, bevorzugt >10:1.

In verschiedenen Ausführungsformen der vorliegenden Erfindung wird das Polymer der Polymermatrix ausgewählt aus thermoplastischen Elastomeren oder Mischungen davon.

In weiteren Ausführungsformen der Erfindung wird das Polymer der Matrix ausgewählt aus Poly(Ethylen/Bitumen) (ECB), Poly(Ethylen/Vinylacetat) (PEVA, PEVAC), Polyether-Block-Amide (PEBA), Poly(Styrol/Acrylnitril) (SAN), Poly(Styrol/Butadien) (PBS), Poly(Styrol/Butadien/Styrol) (SBS), Poly(Acrylnitril/Butadien/Styrol) (ABS), Poly(Methacrylat/Acrylat/Styrol) (PAAS), Poly(Methylmethacrylat/Butadien/Styrol) (MBS), Poly(Acrylnitril/Ethylen-Propen-Dien/Styrol), Poly(Acrylnitril/Ethylen/ Propylen/Styrol) (AES), Poly(Acrylnitril/Styrol/Acrylester) (ASA), Poly(Styrol/ Maleinanhydrid) (SMA).

In verschiedenen Ausführungsformen wird das Polymer ausgewählt aus Poly(Styrol/Butadien/Styrol) (SBS). Das thermoplastische Elastomer StyrolButadien-Styrol (SBS) wird beispielsweise von UV-Strahlen und Temperatur angegriffen. Über einen längeren Zeitraum können deswegen die Eigenfarbe und die Struktur eines aus SBS gefertigten Produkts stark beeinflusst werden. Daher wird SBS bislang vorwiegend nur im Innenbereich und bei geringer Temperaturbelastung eingesetzt. Die Verwendung der erfindungsgemäßen Zusammensetzung kann das Einsatzgebiet solcher Polymere auch auf den Außeneinsatz und Einsatz bei höheren Temperaturen erweitern.

Die erfindungsgemäßen Zusammensetzungen können das Polymer der Polymermatrix in einer nicht oder nur teilweise polymerisierten Form, d.h. beispielsweise als Präpolymer oder als Monomer enthalten. In einem solchen Fall handelt es sich um eine noch nicht vollständig ausgehärtete Polymerzusammensetzung, die im Folgenden den entsprechenden Aushärtungsschritten unterzogen werden kann. Ebenfalls erfasst werden aber bereits vollständig ausgehärtete Polymerzusammensetzungen.

In weiteren Ausführungsformen der Erfindung kann die Polymerzusammensetzung weitere Hilfs- und Zusatzstoffe enthalten, die dem Fachmann bekannt sind und beispielsweise Stabilisatoren, Pigmente, Polymerisationsinitiatoren oder -katalysatoren und weitere Füllstoffe einschließen.

In verschiedenen Ausführungsformen enthält die Polymerzusammensetzung neben dem Aufschlussrückstand mindestens einen weiteren Füllstoff. Dabei kann die mittlere Teilchengröße des weiteren Füllstoffs >10 µm, bevorzugt >20 µm, besonders bevorzugt >30 µm betragen.

In einer weiteren Ausführungsform ist der Aufschlussrückstand aus der Titandioxidproduktion teilweise und/oder ganz mit einem anorganischen Oxid beschichtet.

In noch weiteren Ausführungsformen kann der Aufschlussrückstand aus der Titandioxidproduktion eine organische Verbindung enthalten oder ganz und/oder teilweise mit einer organischen Verbindung beschichtet sein. Dabei kann der Aufschlussrückstand aus der Titandioxidproduktion 0,01 Gewichts-% bis 10 Gewichts-%, bevorzugt 0,03 Gewichts-% bis 7 Gewichts-%, insbesondere 0,1 Gewichts-% bis 2 Gewichts-% einer organischen Beschichtung umfassen. Die organische Beschichtung kann eine siliziumorganische Verbindung und/oder ein Polysiloxan enthalten.

In verschiedenen Ausführungsformen bildet die Polymerzusammensetzung ein farbiges Kunststoffmaterial aus, das optional ferner ein Pigment oder Farbstoff umfasst.

In einem weiteren Aspekt, betrifft die Erfindung die Verwendung von Aufschlussrückstand aus der Titandioxidproduktion, wie oben in Zusammenhang mit den erfindungsgemäßen Zusammensetzungen beschrieben, zur Farbstabilisierung eines Polymers, wobei das Polymer der Polymermatrix aus thermoplastischen Elastomeren oder Mischungen davon ausgewählt wird. Die Farbstabilisierung schließt dabei Verbesserungen bei der Farbhaltung ein. Das Polymer kann dabei aus den oben beschriebenen Polymeren ausgewählt werden.

In noch einem weiteren Aspekt, betrifft die Erfindung die Verwendung von Aufschlussrückstand aus der Titandioxidproduktion, wie oben in Zusammenhang mit den erfindungsgemäßen Zusammensetzungen beschrieben, zur Verbesserung der mechanischen und/oder physikalischen Eigenschaften eines Polymers, wobei das Polymer der Polymermatrix aus thermoplastischen Elastomeren oder Mischungen davon ausgewählt wird. Diese Eigenschaften schließen ein, sind aber nicht beschränkt auf Erhöhen der Elastizität, Abriebstabilität, Wärmeformbeständigkeit, Hitzebeständigkeit, Druck-, Scher- oder Biegefestigkeit oder chemischen Beständigkeit oder auf Verringern der Wärmeschrumpfung. Das Polymer kann dabei aus den oben beschriebenen Polymeren ausgewählt werden.

In weiteren Aspekten betrifft die Erfindung ein Verfahren zur Herstellung einer Polymerzusammensetzung gemäß der Erfindung, wobei das Verfahren die Einbettung von neutralisiertem und/oder getrocknetem Aufschlussrückstand aus der Titandioxidherstellung, wobei der der Aufschlussrückstand bei der Gewinnung von Titandioxid beim Aufschluss eines titanhaltigen Ausgangsstoffes mit Schwefelsäure nach dem Sulfatverfahren anfällt, in eine Polymermatrix, wobei das Polymer der Polymermatrix aus thermoplastischen Elastomeren oder Mischungen davon ausgewählt wird, umfasst.

Noch weitere Aspekte betreffen die Verwendung der Polymerzusammensetzung der Erfindung zur Herstellung eines Formkörpers sowie Formkörper, die die Polymerzusammensetzung der Erfindung enthalten.

Weitere Ausführungsformen sind in den Ansprüchen und den Beispielen enthalten. Die folgenden Beispiele dienen der Veranschaulichung der Erfindung.

### Beispiele

### Beispiel 1

Die beim Aufschluss einer titanhaltigen Schlacke mit Schwefelsäure erhaltene feststoffhaltige Aufschlusslösung wird in einen Eindicker überführt. Aus dem Unterlauf des Eindickers wird in einer Filterpresse der Aufschlussrückstand abgetrennt, mit Natronlauge neutralisiert, erneut filtriert und anschließend sprühgetrocknet.

Das erhaltene Produkt weist folgende Zusammensetzung auf:

| **Sprühgetrockneter Aufschlussrückstand** | | |
|---|---|---|
| Restfeuchte IR Tr. 30' 105 °C | [%] | 0,45 |
| Restfeuchte IR Tr. 2d 30" 160 °C | [%] | 0,51 |
| TGV MS-S 2' US-Sonotrode | D[v,0.1] | 1,4 |
| 200W [µm] | D[v,0.5] | 16,3 |
| | D[v,0.9] | 56,6 |
| | D[v,0.98] | 89,6 |
| | D[4.3] | 23,5 |
| DIN-pH | | 8,5 |
| Schüttgewicht | [g/cm³] | 0,96 |
| BET | [m²/g] | 10,6 |
| | | |
| RFA semiquant [%] | Ti | 28,9 |
| | Si | 12,3 |
| | Fe | 5,4 |
| | Ca | 2,6 |
| | Na | 2,5 |
| | Al | 1,7 |
| | Mg | 1,4 |
| | S | 1,2 |
| | Mn | 0,8 |
| | K | 0,3 |
| | Zr | 0,2 |
| | Nb | 0,1 |

### Beispiel 2

Um die Erhöhung der Farbstabilität (Farbhaltung) sowie der Temperaturstabilität nachzuweisen, wurden Kurzbewitterungstests in Anlehnung an die ASTM ISO 4892-2 sowie thermische Ofenalterungsversuche bei 70 °C und anschließende mechanische Beurteilungen mit verschiedenen Proben durchgeführt (aus Tabelle 1 gehen die Parameter des Bewitterungstests hervor). Der Aufschlussfilterkuchen, der verwendet wurde, wurde wie in Beispiel 1 beschrieben hergestellt.

**Tabelle 1**

| | Atlas Xenotest 1200 gemäß ASTM ISO 4892-2 |
|---|---|
| Bestrahlung (290-400 nm) | 59 W/m² |
| Schwarzstandard | 45 °C |
| Temperatur (Testkammer) | 40 °C |
| relative Luftfeuchtigkeit | 60 % |
| Zykluslänge (hohe Luftfeuchtigkeit) | 3 min |
| Zykluslänge (Trockenperiode) | 17 min |

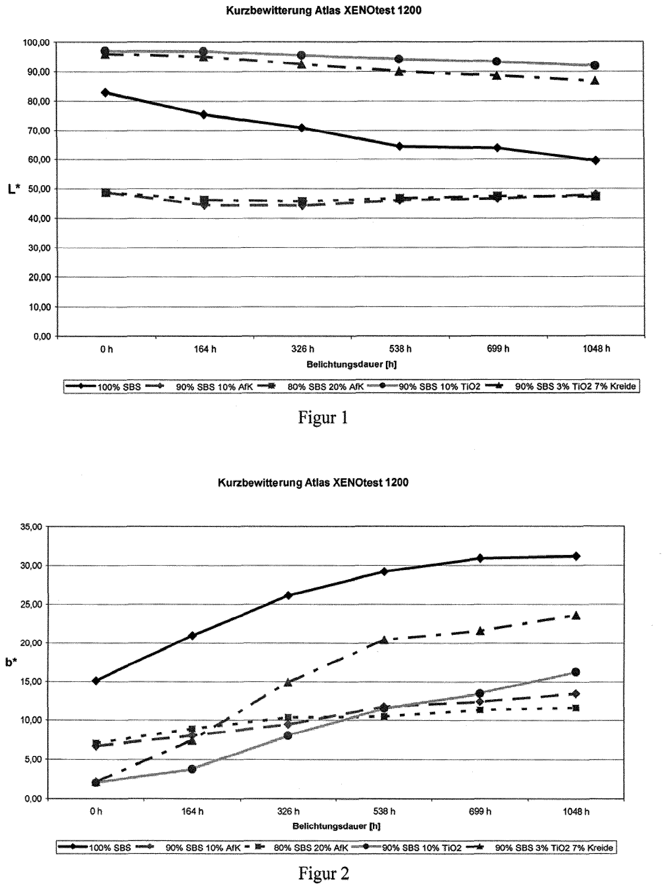

Figur 1 und Figur 2 zeigen die nach CIE Lab bestimmte Helligkeit L* (Figur 1) und Farbton b* (Figur 2) von SBS, SBS mit 10% Titandioxid und SBS mit 3% Titandioxid und 7% Kreide im Vergleich zu SBS mit 10% bzw. 20% Aufschlussrückstand (AfK) nach Bewitterungstests.

Aus den dargestellten Ergebnissen wird deutlich, dass reines SBS mit zunehmender Bewitterungsdauer einen starken Verlust in der Helligkeit L* erfährt. Dies gilt in abgeschwächtem Maße auch für SBS mit Titandioxid und Kreide als Füllstoff sowie für SBS mit Titandioxid als Füllstoff ohne Kreide. Hier liegen die Anfangswerte für L* durch die farbgebende Wirkung von Titandioxid verständlicherweise höher. Wird allerdings Aufschlussrückstand als Füllstoff verwendet, kann selbst nach 1048 Stunden Bewitterungsdauer keine signifikante Erniedrigung der Helligkeit beobachtet werden. Die niedrigeren L*-Werte zu Beginn des Versuchs sind auf die Farbigkeit des Aufschlussrückstandes zurückzuführen. Eine Auswirkung der Füllmenge mit Aufschlussrückstand wurde nicht beobachtet.

Im Farbton b* (Figur 2) zeigt sich ebenso die positive Auswirkung der Verwendung von Aufschlussrückstand als Füllstoff in SBS. Steigt hier der b*-Wert mit zunehmender Bewitterungsdauer bei SBS ohne Füllstoff wie auch bei SBS mit Titandioxid oder SBS mit Kreide und Titandioxid stark an (Vergilbung), kann bei SBS mit Aufschlussrückstand nur ein geringer Anstieg der b*-Werte verzeichnet werden. Eine Auswirkung der Füllmenge mit Aufschlussrückstand konnte unter diesen Bedingungen auch bei Betrachtung der b*-Werte nicht beobachtet werden.

Die Einwirkung von Temperatur auf einen Werkstoff kann empfindliche Auswirkungen auf die Eigenschaften des Werkstoffs haben. Dies zeigt sich zum Beispiel im Farbton b*, der eine Vergilbung des Werkstoffes anzeigt.

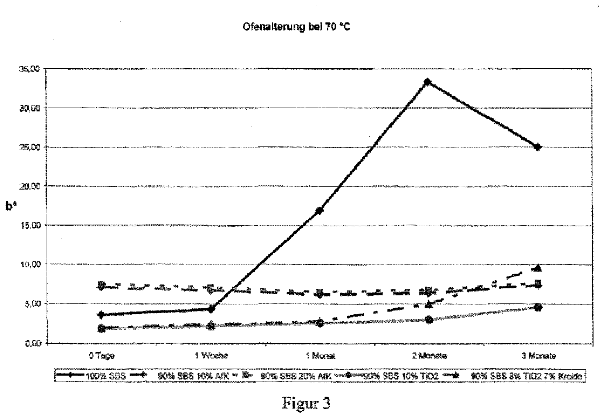

Figur 3 zeigt den Farbton b* nach einer Thermischen Alterung bei 70 °C über bis zu 3 Monate von SBS, SBS mit 10% Titandioxid und SBS mit 3% Titandioxid und 7% Kreide im Vergleich zu SBS mit 10% bzw. 20% Aufschlussrückstand.

Sowohl für SBS als auch in abgeschwächtem Maße SBS mit Titandioxid und Kreide und SBS mit Titandioxid ohne Kreide als Füllstoff wird mit zunehmender Behandlungsdauer im Ofen bei 70°C eine Zunahme des b*-Wertes beobachtet. SBS, das mit Aufschlussrückstand gefüllt wurde, zeigt hingegen einen stabilen, sich über die Dauer von 3 Monaten kaum verändernden Farbton b*.

Das mechanische Verhalten aller Proben nach Bewitterung sowie nach thermischer Alterung wurde beurteilt. Alle Proben waren stark beansprucht. Nach thermischer Alterung war SBS mit 10% bzw. 20% Aufschlussrückstand, SBS mit 10% Titandioxid und SBS mit 3% Titandioxid und 7% Kreide im Vergleich zu reinem SBS deutlich weniger spröde. Die Proben nach Bewitterung waren alle sehr spröde, eine Differenzierung war nicht möglich. Insgesamt zeigten die mit Aufschlussrückstand gefüllten SBS-Proben keine Abweichungen in den mechanischen Eigenschaften gegenüber den SBS-Proben mit Titandioxid oder SBS-Proben mit Kreide und Titandioxid.

## Patentansprüche

1. Polymerzusammensetzung enthaltend eine Polymermatrix und einen oder mehrere Füllstoffe, wobei mindestens ein Füllstoff den bei der Gewinnung von Titandioxid beim Aufschluss eines titanhaltigen Ausgangsstoffes anfallenden unlöslichen Aufschlussrückstand enthält oder aus diesem hergestellt ist, wobei das Polymer der Polymermatrix aus thermoplastischen Elastomeren oder Mischungen davon ausgewählt wird, und wobei der Aufschlussrückstand bei der Gewinnung von Titandioxid beim Aufschluss eines titanhaltigen Ausgangsstoffes mit Schwefelsäure nach dem Sulfatverfahren anfällt.

2. Die Polymerzusammensetzung nach Anspruch 1, wobei die Polymerzusammensetzung 0,5 bis 60 Gew.-% Aufschlussrückstand bezogen auf die Polymerzusammensetzung enthält.

3. Die Polymerzusammensetzung nach einem der Ansprüche 1 oder 2, wobei der Aufschlussrückstand vor der Verwendung als Füllstoff
(a) mit verdünnter Schwefelsäure und/oder Wasser gewaschen; und/oder
(b) ganz oder teilweise neutralisiert wird; und/oder
(c) getrocknet wird; und/oder
(d) gemahlen wird.

4. Die Polymerzusammensetzung nach einem der Ansprüche 1-3, wobei
(a) der Sulfatgehalt des Aufschlussrückstandes <5 Gew.-% bezogen auf den Feststoffgehalt des Aufschlussrückstandes beträgt; und/oder
(b) der Aufschlussrückstand <7 Gew.-% wasserlösliche Salze enthält; und/oder
(c) der pH-Wert des Aufschlussrückstandes >2,5 beträgt.

5. Die Polymerzusammensetzung nach einem der Ansprüche 1-4, wobei das Polymer der Polymermatrix ausgewählt wird aus der Gruppe bestehend aus Poly(Ethylen/ Bitumen) (ECB), Poly(Ethylen/Vinylacetat) (PEVA, PEVAC), Polyether-Block-Amide (PEBA), Poly(Styrol/Acrylnitril) (SAN), Poly(Styrol/Butadien) (PBS), Poly(Styrol/Butadien/Styrol) (SBS), Poly(Acrylnitril/Butadien/Styrol) (ABS), Poly(Methacrylat/Acrylat/Styrol) (PAAS), Poly(Methylmethacrylat/Butadien/ Styrol) (MBS), Poly(Acrylnitril/Ethylen-Propen-Dien/Styrol), Poly(Acrylnitril/ Ethylen/Propylen/Styrol) (AES), Poly(Acrylnitril/Styrol/Acrylester) (ASA), Poly(Styrol/Maleinanhydrid) (SMA).

6. Die Polymerzusammensetzung nach einem der Ansprüche 1-5, wobei die Polymerzusammensetzung ein oder mehrere weitere Hilfs- und/oder Zusatzstoffe enthält.

7. Die Polymerzusammensetzung nach einem der Ansprüche 1-6, wobei die Polymerzusammensetzung neben dem Aufschlussrückstand mindestens einen weiteren Füllstoff enthält.

8. Die Polymerzusammensetzung nach einem der Ansprüche 1-7, wobei der Aufschlussrückstand aus der Titandioxidproduktion teilweise und/oder ganz mit einem anorganischen Oxid beschichtet ist.

9. Die Polymerzusammensetzung nach einem der Ansprüche 1-8, wobei der Aufschlussrückstand aus der Titandioxidproduktion eine organische Verbindung enthält oder ganz und/oder teilweise mit einer organischen Verbindung beschichtet ist.

10. Verwendung von Aufschlussrückstand aus der Titandioxidproduktion zur Farbstabilisierung eines Polymers und/oder zur Verbesserung der mechanischen und/oder physikalischen Eigenschaften eines Polymers, wobei das Polymer der Polymermatrix aus thermoplastischen Elastomeren oder Mischungen davon ausgewählt wird, und wobei der Aufschlussrückstand bei der Gewinnung von Titandioxid beim Aufschluss eines titanhaltigen Ausgangsstoffes mit Schwefelsäure nach dem Sulfatverfahren anfällt.

11. Verfahren zur Herstellung einer Polymerzusammensetzung gemäß einem der Ansprüche 1-9, wobei das Verfahren die Einbettung von neutralisiertem und/oder getrocknetem Aufschlussrückstand aus der Titandioxidherstellung in eine Polymermatrix umfasst, wobei das Polymer der Polymermatrix aus thermoplastischen Elastomeren oder Mischungen davon ausgewählt wird, und wobei der Aufschlussrückstand bei der Gewinnung von Titandioxid beim Aufschluss eines titanhaltigen Ausgangsstoffes mit Schwefelsäure nach dem Sulfatverfahren anfällt.

12. Verwendung einer Polymerzusammensetzung gemäß einem der Ansprüche 1-9 zur Herstellung eines Formkörpers.

13. Formkörper enthaltend die Polymerzusammensetzung gemäß einem der Ansprüche 1-9.

## Claims

1. A polymer composition containing a polymer matrix and one or more fillers, wherein at least one filler contains the insoluble digestion residue which precipitates out during digestion of a titanium-containing starting material or which is produced therefrom, wherein the polymer of the polymer matrix is selected from thermoplastic elastomers or mixtures thereof, and wherein the digestion residue precipitates out during the production of titanium dioxide during digestion of a titanium-containing starting material with sulphuric acid in accordance with the sulphate process.

2. The polymer composition according to claim 1, wherein the polymer composition contains 0.5 to 60 % by weight of digestion residue with respect to the polymer composition.

3. The polymer composition according to claim 1 or 2 wherein, prior to using the digestion residue as a filler:
(a) it is washed with diluted sulphuric acid and/or water; and/or
(b) it is completely or partially neutralized; and/or
(c) it is dried; and/or
(d) it is ground.

4. The polymer composition according to any one of claims 1 - 3, wherein:
(a) the sulphate content of the digestion residue is < 5 % by weight with respect to the solid content of the digestion residue; and/or
(b) the digestion residue contains < 7 % by weight of soluble salts; and/or
(c) the pH of the digestion residue is > 2.5.

5. The polymer composition according to any one of claims 1 - 4, wherein the polymer of the polymer matrix is selected from the group consisting of poly(ethylene/bitumen) (ECB), poly(ethylene/vinyl acetate) (PEVA, PEVAC), polyether block amide (PEBA), poly(styrene/acrylonitrile) (SAN), poly(styrene/butadiene) (PBS), poly(styrene/butadiene/styrene) (SBS), poly(acrylonitrile/butadiene/styrene) (ABS), poly(methacrylate/acrylate/styrene) (PAAS), poly(methylmethacrylate/butadiene/styrene) (MBS), poly(acrylonitrile/ethylene-propene-diene/styrene), poly(acrylonitrile/ethylene/propylene/styrene) (AES), poly(acrylonitrile/styrene/acrylic ester (ASA), and poly(styrene/maleic anhydride) (SMA).

6. The polymer composition according to any one of claims 1 - 5, wherein the polymer composition contains one or more adjuvants and/or additives.

7. The polymer composition according to any one of claims 1 - 6, wherein the polymer composition contains at least one further filler in addition to the digestion residue.

8. The polymer composition according to any one of claims 1 - 7, wherein the digestion residue from titanium dioxide production is partially and/or completely coated with an inorganic oxide.

9. The polymer composition according to any one of claims 1 - 8, wherein the digestion residue from titanium dioxide production contains an organic compound or is partially and/or completely coated with an organic compound.

10. Use of digestion residue from titanium dioxide production in order to stabilize the colour of a polymer and/or to improve the mechanical and/or physical properties of a polymer, wherein the polymer of the polymer matrix is selected from thermoplastic elastomers or mixtures thereof, and wherein the digestion residue from the production of titanium dioxide precipitates out during digestion of a titanium-containing starting material with sulphuric acid in accordance with the sulphate process.

11. A method for the manufacture of a polymer composition according to any one of claims 1 - 9, wherein the method comprises embedding neutralized and/or dried digestion residue from titanium dioxide production in a polymer matrix, wherein the polymer of the polymer matrix is selected from thermoplastic elastomers or mixtures thereof, and wherein the digestion residue precipitates out during the production of titanium dioxide during digestion of a titanium-containing starting material with sulphuric acid in accordance with the sulphate process.

12. Use of a polymer composition according to any one of claims 1 - 9, for the manufacture of a moulded article.

13. A moulded article containing the polymer composition according to any one of claims 1 - 9.

## Revendications

1. Composition polymère contenant une matrice polymère et un ou plusieurs agents de charge, au moins un agent de charge contenant le résidu de désagrégation insoluble produit lors de la préparation de dioxyde de titane par désagrégation d'une matière de départ contenant du titane ou étant produit à partir de celui-ci, le polymère de la matrice polymère étant choisi dans des élastomères thermoplastiques ou des mélanges de ces derniers et le résidu de désagrégation se produisant lors de la préparation de dioxyde de titane par désagrégation d'une matière de départ contenant du titane avec de l'acide sulfurique, selon le procédé au sulfate.

2. La composition polymère selon la revendication 1, la composition polymère contenant de 0,5 à 60 % en poids de résidu de désagrégation en rapport à la composition polymère.

3. La composition polymère selon l'un quelconque des revendications 1 ou 2, avant l'utilisation en tant qu'agent de charge, le résidu de désagrégation
(a) étant lavé avec de l'acide sulfurique dilué et/ou de l'eau ; et/ou
(b) étant neutralisé totalement ou en partie ; et/ou
(c) étant séché ; et/ou
(d) étant broyé.

4. La composition polymère selon l'une quelconque des revendications 1 - 3,
(a) la teneur en sulfate du résidu de désagrégation étant < 5 % en poids en rapport à la teneur en solide du résidu de désagrégation ; et/ou
(b) le résidu de désagrégation contenant < 7 % en poids de sels hydrosolubles ; et/ou
(c) la valeur pH du résidu de désagrégation étant > 2,5.

5. La composition polymère selon l'une quelconque des revendications 1 - 4, le polymère de la matrice polymère étant choisi dans le groupe composé de poly(éthylène/ bitumes) (ECB), poly(éthylène/vinylacétate) (PEVA, PEVAC), polyéther-blocamides (PEBA), poly(styrène/acrylonitrile) (SAN), poly(styrène/butadiène) (PBS), poly(styrène/butadiène/styrène) (SBS), poly(acrylonitrile/butadiène/styrène) (ABS), poly(méthacrylate/acrylate/styrène) (PAAS), poly(méthylméthacrylate/butadiène/styrène) (MBS), poly(acrylonitrile/éthylène-propène-diène/styrène), poly(acrylonitrile/ éthylène/propylène/styrène) (AES), poly(acrylonitrile/styrène/ester acrylique) (ASA), poly(styrène/anhydride maléique) (SMA).

6. La composition polymère selon l'une quelconque des revendications 1 - 5, la composition polymère contenant un ou plusieurs agents auxiliaires et/ou additifs.

7. La composition polymère selon l'une quelconque des revendications 1 - 6, parallèlement au résidu de désagrégation, la composition polymère contenant au moins un agent de charge supplémentaire.

8. La composition polymère selon l'une quelconque des revendications 1 - 7, le résidu de désagrégation de la production de dioxyde de titane étant revêtu partiellement et/ou totalement d'un oxyde anorganique.

9. La composition polymère selon l'une quelconque des revendications 1 - 8, le résidu de désagrégation de la production de dioxyde de titane contenant un composé organique ou étant revêtu totalement et/ou partiellement d'un composé organique.

10. Utilisation de résidu de désagrégation de la production de dioxyde de titane pur la stabilisation de couleur d'un polymère et/ou pour l'amélioration des propriétés mécaniques et/ou physiques d'un polymère, le polymère de la matrice polymère étant choisi dans des élastomères thermoplastiques ou des mélanges de ces derniers et le résidu de désagrégation se produisant lors de la préparation de dioxyde de titane par désagrégation d'une matière de départ contenant du titane avec de l'acide sulfurique, selon le procédé au sulfate.

11. Procédé destiné à la fabrication d'une composition polymère selon l'une quelconque des revendications 1 - 9, le procédé comprenant l'incorporation de résidu de désagrégation neutralisé et/ou séché de la production de dioxyde de titane dans une matrice polymère, le polymère de la matrice polymère étant choisi dans des élastomères thermoplastiques ou des mélanges de ces derniers et le résidu de désagrégation se produisant lors de la préparation de dioxyde de titane par désagrégation d'une matière de départ contenant du titane avec de l'acide sulfurique, selon le procédé au sulfate.

12. Utilisation d'une composition polymère selon l'une quelconque des revendications 1 - 9 pour la fabrication d'un corps moulé.

13. Corps moulé contenant la composition polymère selon l'une quelconque des revendications 1 - 9.
